Europäisches Patentamt

European Patent Office

Office européen des brevets

(19)

(11) Numéro de publication: **0 299 274**
**A1**

# (12) DEMANDE DE BREVET EUROPEEN

(21) Numéro de dépôt: **88110287.5**

(51) Int. Cl.⁴: **H04B 7/00**

(22) Date de dépôt: **28.06.88**

(30) Priorité: **06.07.87 FR 8709560**

(43) Date de publication de la demande:
**18.01.89 Bulletin 89/03**

(84) Etats contractants désignés:
**AT DE FR GB IT SE**

(71) Demandeur: **ALCATEL ESPACE**
**11, avenue Dubonnet**
**F-92407 Courbevoie Cédex(FR)**

(72) Inventeur: **Lenormand, Régis**
**7bis, rue Pargaminières**
**F-31000 Toulouse(FR)**
Inventeur: **Maurel, Jacques**
**20, rue de la Francoy**
**F-31270 Cugnaux(FR)**
Inventeur: **Pinel, Alain**
**3, impasse Bazardens**
**F-31270 Cugnaux(FR)**
Inventeur: **Bardel, Thierry**
**Lieu dit "Cere"**
**F-31810 Venerque(FR)**
Inventeur: **Neron, Jacques**
**26, rue A. Cavagnol**
**F-31500 Toulouse(FR)**
Inventeur: **Rene, Didier**
**30, avenue Pierre Molette**
**F-31100 Toulouse(FR)**

(74) Mandataire: **Weinmiller, Jürgen et al**
**Lennéstrasse 9 Postfach 24**
**D-8133 Feldafing(DE)**

(54) **Dispositif autoadaptatif de rattrapage des dégradations de la pureté de polarisation dans une liaison hyperfréquence.**

(57) La présente invention se rapport à un dispositif autoadaptatif de rattrapage des dégragations de la pureté de polarisation dans une liaison hyperfréquence comprenant :
- un premier (10) et un second (11) coupleurs 3dB, à deux entrées et deux sorties, disposés en série ;
- au moins un déphaseur (20, 21) à deux entrées ;
- une boucle de contre-réaction (22) ;
au moins un déphaseur (20, 21) étant disposé sur l'une des deux liaisons entre le premier (10) et le second (11) coupleur, la boucle de contre-réaction (22) étant connectée entre l'une des sorties (18, 19) du second coupleur (11) et une seconde entrée de

chaque déphaseur.

Application notament au domaine des hyperfréquences.

## Dispositif autoadaptatif de rattrapage des dégradations de la pureté de polarisation dans une liaison hyperfréquence.

L'invention concerne un dispositif autoadaptatif de rattrapage des dégradations de la pureté de polarisation dans une liaison hyperfréquence.

Le dispositif de l'invention tel qu'il va être décrit est destiné à être disposé entre comme une antenne et une électronique de réception, chacune de ses deux entrées pouvant être, éventuellement, précédée d'un amplificateur faible bruit.

Le dispositif de l'invention a pour fonction d'effectuer la somme des modules des composantes de polarisation principale et inverse présentes à l'interface antenne, quelle que soit la valeur relative de ces deux composantes.

Des systèmes de l'art connu fonctionnant sur la base d'asservissements mécaniques, sont déjà utilisés pour des stations sol.

De tels systèmes ne sont pas implantables sur des satellites car leur temps de réaction est trop long.

La présente invention a pour objet de pallier cet inconvénient.

Elle propose à cet effet un dispositif autoadaptatif de rattrapage des dégradations de la pureté de polarisation dans une liaison hyperfréquence, caractérisé en ce qu'il comprend :
- un premier et un second coupleurs 3dB, à deux entrées et deux sorties, disposés en série ;
- au moins un déphaseur à deux entrées ;
- une boucle de contre-réaction ;
au moins un déphaseur étant disposé sur l'une des deux liaisons entre le premier et le second coupleur, la boucle de contre-réaction étant connectée entre l'une des sorties du second coupleur et une seconde entrée de chaque déphaseur, et en ce que la boucle de contre-réaction comprend un détecteur d'amplitude à diode en série avec une unité de contrôle qui a pour rôle de commander respectivement chaque déphaseur.

Le dispositif de l'invention présente l'avantage de n'utiliser que des composants électroniques hyperfréquences, à l'exclusion de tout élément mécanique.

Un tel dispositif, très simple dans sa conception, permet de minimiser les pertes dues à une mauvaise adaptation entre la polarisation de l'onde reçue et la polarisation de l'antenne, et d'améliorer ainsi les bilans de liaison. De plus, il permet de relâcher les contraintes relatives à la polarisation de l'onde reçue.

Dans le cas ou la transmission est du type spectre étalé, le dispositif de l'invention permet un asservissement basé sur la variation du niveau du signal après recouvrement de code (niveau disponible sur une sortie spécifique du transpondeur).

Avantageusement le dispositif selon l'invention comprend un déphaseur disposé sur l'une des entrées du premier coupleur.

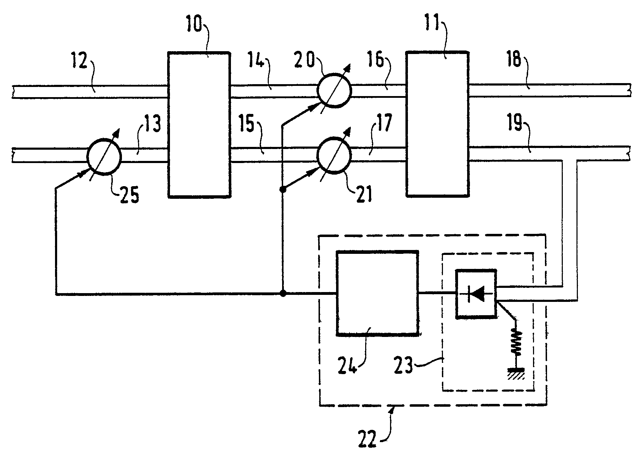

Les caractéristiques et avantages de l'invention ressortiront d'ailleurs de la description qui va suivre, à titre d'exemple non limitatif, en référence à la figure annexée qui illustre une représentation schématique du dispositif selon l'invention.

Le dispositif de l'invention comprend
- un premier (10) et un second (11) coupleurs, à deux entrées (12, 13 et 16, 17) et deux sorties (14, 15 et 18, 19), disposés en série ; les deux sorties 14 et 15 du premier coupleur 10 étant reliées respectivement aux deux entrées 16 et 17 du second coupleur 11 ;
- au moins un déphaseur (20, 21) à deux entrées disposé sur au moins l'une des liaisons entre le premier et le second coupleur ;
- une boucle de contre-réaction 22 entre l'une des sorties du second coupleur et l'entrée de commande du déphasage de chaque déphaseur (20, 21).

Sur la figure, un déphaseur (20, 21) a été représenté sur chacune des liaisons entre le premier (10) et le second (11) déphaseurs : mais le dispositif de l'invention peut fonctionner avec seulement l'un des deux.

La boucle de contre-réaction 22 comprend un détecteur d'amplitude à diode 23 suivi d'une unité de contrôle 24 permettant de commander la valeur du déphasage de chaque déphaseur.

L'entrée de la boucle de contre-réaction peut être branchée sur l'une ou l'autre des deux sorties 18 et 19 du second coupleur 11.

En fonctionnement les deux composantes (polarisation circulaire principale et inverse) du signal reçu accèdent chacune à une branche (12, 13) du coupleur 3 dB d'entrée 10.

Pour les signaux en provenance d'une direction choisie, les deux premiers déphaseurs 20 et 21, commandables par l'unité 24, sont réglés à une valeur de repos telle que, dans cette configuration optimale, le signal en sortie du second coupleur 3 dB (11) est maximal, par exemple, sur la première branche 18 et presque nul sur la seconde branche 19. En effet à chaque direction de réception est liée une performance de pureté de polarisation.

Pour les signaux en provenance de toute autre direction, le déséquilibre des deux composantes du signal reçu (la polarisation reçue n'est pas circulaire) provoque l'apparition d'un signal sur la seconde branche 19 de sortie du second coupleur 3 dB.

Ce signal constitue la commande de la boucle de contre réaction 24 destinée à commander les déphaseurs 20 et 21, permettant ainsi d'annuler le signal de la seconde branche 19 de sortie du second coupleur et de maximiser le signal de la première branche 18, qui est le signal utile. La commande de ces déphaseurs peut consister par exemple à faire varier leur courant de polarisation. La contre-réaction peut aussi être reliée en entrée à l'autre sortie 18 du second coupleur 11. Au lieu de permettre une détection de zéro, elle permet alors réaliser une recherche de maximum de signal.

Comme représenté sur la figure un troisième déphaseur 25, dont la valeur de déphasage est commandée par l'unité de contrôle 24, peut être disposé sur l'une (13) des entrées du premier coupleur 20.

Ce troisième déphaseur 25 a pour rôle de permettre un rattrapage de phase entre les deux entrées 12 et 13 du premier coupleur 10 ; Les deux autres déphaseurs ayant ensuite un rôle de déphaseurs de sommation et permettant ainsi de jouer sur l'amplitude du signal hyperfréquence en sortie du second coupleur. Ainsi grâce à l'unité de contrôle 24, pour une valeur de déphasage fixée grâce au troisième déphaseur 25, on peut alors faire varier, grâce aux autres déphaseurs 20 et 21, les amplitudes du signal en sortie.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

Ainsi les coupleurs 3dB peuvent être des coupleurs hybrides ou des "Tés magiques".

## Revendications

1/ Dispositif autoadaptatif de rattrapage des dégragations de la pureté de polarisation dans une liaison hyperfréquence, caractérisé en ce qu'il comprend :
- un premier (10) et un second (11) coupleurs 3dB, à deux entrées et deux sorties, disposés en série ;
- au moins un déphaseur (20, 21) à deux entrées ;
- une boucle de contre-réaction (22) ;
au moins un déphaseur (20, 21) étant disposé sur l'une des deux liaisons entre le premier (10) et le second (11) coupleur, la boucle de contre-réaction (22) étant connectée entre l'une des sorties (18, 19) du second coupleur (11) et une seconde entrée de chaque déphaseur, et en ce que la boucle de contre-réaction (24) comprend un détecteur d'amplitude à diode (23) en série avec une unité de contrôle (24) qui a pour rôle de commander respectivement chaque déphaseur (20, 21, 25).

2/ Dispositif selon la revendication 1, caractérisé en ce que les coupleurs (10, 11) sont des coupleurs hybrides ou des "Té magiques".

3/ Dispositif selon l'une quelconque des revendications 1 ou 2, caractérisé en ce qu'un déphaseur (25) est disposé sur l'une des entrées du premier coupleur.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 081 971  (ASSOCIATED ELECTRICAL INDUSTRIES)<br>* Page 1, ligne 72 - page 2, ligne 28; page 2, lignes 67-98; page 4, lignes 21-30 * | 1 | H 04 B    7/00 |
| A | --- | 3 | |
| Y | US-A-4 005 414  (GOGGINS)<br>* Colonne 2, ligne 57 - colonne 3, ligne 20; colonne 3, lignes 25-36 * | 1 | |
| A | --- | 2 | |
| A | EP-A-0 026 924  (WESTERN ELECTRIC)<br>* Page 4, dernier alinéa, page 5, ligne 15 - page 6, ligne 24; page 7, ligne 26 - page 8, ligne 5 *<br>--- | 1 | |
| A | IEEE TRANSACTIONS ON COMMUNICATIONS, vol. COM-24, no. 9, septembre 1976, pages 986-999, New York, US; H. KANNOWADE: "An automatic control system for compensating cross-polarization coupling in frequency-reuse communication systems "<br>* Page 987, colonne de gauche, lignes 11-24 *<br>----- | 1 | **DOMAINES TECHNIQUES RECHERCHES (Int. Cl.4)**<br><br>H 04 B<br>G 01 S |

**Le présent rapport a été établi pour toutes les revendications**

| Lieu de la recherche | Date d'achèvement de la recherche | Examinateur |
|---|---|---|
| LA HAYE | 07-10-1988 | HOLPER G.E.E. |